# EUROPEAN PATENT APPLICATION

(11) **EP 2 340 702 A1**
(43) Date of publication of application: **06.07.2011**
(21) Application number: 10196617.4
(22) Date of filing: 22.12.2010
(51) Int. Cl.: A01D 34/73, E01H 1/05

(54) **Brush head for a rotary weed cutter**

(30) Priority: 05.01.2010 NL 2004059
(71) Applicant: Timmerman, Anthonius Geerard, 8251 HT Dronten (NL)
(72) Inventor: Timmerman, Anthonius Geerard, 8251 HT Dronten (NL)
(74) Representative: Klavers, Cornelis

(57) **Abstract**

There is disclosed a brush head (1) for a rotary cutter, comprising: a disc-shaped body provided with two radial flanges (3) separated by a channel (2), in which flanges (3) corresponding openings (4) are provided, and cutting elements (5) having end portions (6) which are detachably fixed in said openings (4) by means of fastening elements (7). The cutting elements (5) extend axially outside the disc-shaped body, and the end portions (6) are designed to be axially passed through the openings (4) and the channel (2) so as to be immovably fixed in the openings (4) by means of said fastening elements (7). In practice, an almost ideal position of the cutting elements (5), which bend slightly outwards in that situation, is realised upon rotation of the brush head (1), so that weeds can be removed from the paving in a simple manner if the rotary cutter is handled in a normal manner.

## Description

The present invention relates to a brush head for a rotary cutter, comprising: a disc-shaped body provided with two radial flanges separated by a channel, in which flanges corresponding openings are provided, and cutting elements having end portions which are detachably fixed in said openings by means of fastening elements.

The present invention further relates to a rotary cutter provided with such a brush head and to a cutting element for use in the brush head.

Such a brush head is known from EP 0 683 969, it is used on a rotary cutter for trimming grass. The known brush head comprises a disc-shaped body provided with two radial flanges separated by a channel, in which flanges corresponding openings are provided. The brush head further comprises filamentary cutting elements having end portions which are detachably fixed in the openings by means of fastening elements and which are radially pivotable between the flanges. Said end portions are designed to cause the pivotable cutting elements to move radially outwards at certain angles upon rotation of the rotary cutter for trimming the grass.

A drawback of the known brush head and rotary cutter is that in practice said brush head and said rotary cutter are not very suitable for removing weeds in paving, for example, in a simple manner.

The object of the present invention is to provide an improved brush head and rotary cutter which are more universal and which are in particular also suitable for removing weeds present between paving stones, paving slabs and other paving elements in a simple manner.

In order to accomplish that object, the brush head according to the invention is characterised in that the cutting elements extend axially outside the disc-shaped body and that the end portions are designed to be axially passed through the openings and the channel so as to be immovably fixed in the openings by means of said fastening elements.

The advantage of the brush head according to the invention is that in practice the axial starting position of the cutting elements leads to an almost ideal position of the cutting elements, which bend slightly outwards in that situation, upon rotation of the brush head in the rotary cutter. This makes it possible to remove weeds from the paving if the rotary cutter is handled in a normal manner and in the usual position thereof.

The axial cutting elements are moreover readily detachable from the brush head and can be replaced after some time.

One embodiment of the brush head is according to the invention characterised in that said fastening elements form part of a threaded connection.

Said threaded connection ensures a strong but easily detachable connection, so that the cutting elements are easy to replace.

Another embodiment of the brush head is according to the invention characterised in that the fastening elements are configured as hooks, whilst in a special embodiment the brush head comprises blocking elements and the openings are designed to receive said blocking elements after the end portions have been hooked and turned therein.

Such blocking elements prevent the hooks (in this case) by means of which the end portions are fixed between the flanges from falling out of the openings when work is being carried out with the rotary cutter.

Further detailed possible embodiments as defined in the other claims and their concomitant advantages are elucidated in the description below.

Now the brush head according to the present invention, among other things, will be described in more detail with reference to the figures below, in which like parts are indicated by the same numerals. In the drawings:
Figures 1A and 1B show a first embodiment of a brush head for a rotary cutter while cutting elements are being fixed therein; and
Figures 2A, 2B, 2C and 2D show a second embodiment of a brush head for the rotary cutter while cutting elements are being fixed therein.

The above figures each show a different type of bush cutter or brush head 1 suitable for being mounted in a rotary cutter as known per se for trimming grass and/or weeds. The brush head 1, which rotates in use, comprises a substantially disc-shaped, one-part or multipart body L circumferentially provided with two radial flanges 3-1 and 3-2, for the sake of brevity indicated by the single numeral 3 hereinafter, which are separated from each other by a channel 2. Said flanges 3 are provided with corresponding through openings 4-1 and 4-2, which are aligned in practice. The brush head 1 further comprises cutting elements 5-1, 5-2, 5-3 and 5-4, each having end portions 6-1 and 6-2, respectively, which are detachably fixed in the openings 4 by means of fastening elements 7-1 and 7-2, respectively.

Such cutting elements 5 may consist of one more cables or wires 8, which may or may not be twined together and which may be individually and/or jointly coated. Such a coating (not shown) may comprise plastic material, for example. The wear-resistant wires may be made of steel or of a plastic material, such as nylon.

The end of the wires 8 that is to be fixed in the brush head 1 is provided with a sleeve-like holder 9 extending in axial direction through the two openings 4-1 and 4-2 and the channel 2. The sleeve-like holder 9, which forms part of the end portions 6, is fixed in the openings 4 in the flanges 3, being axially immovable therein, together with said end portions in a manner yet to be described. The sleeve-like holder 9, which is in line with the wires 8, further functions to hold together the wires 8 of the cutting elements 5, which also extend axially outside the disc-shaped body L.

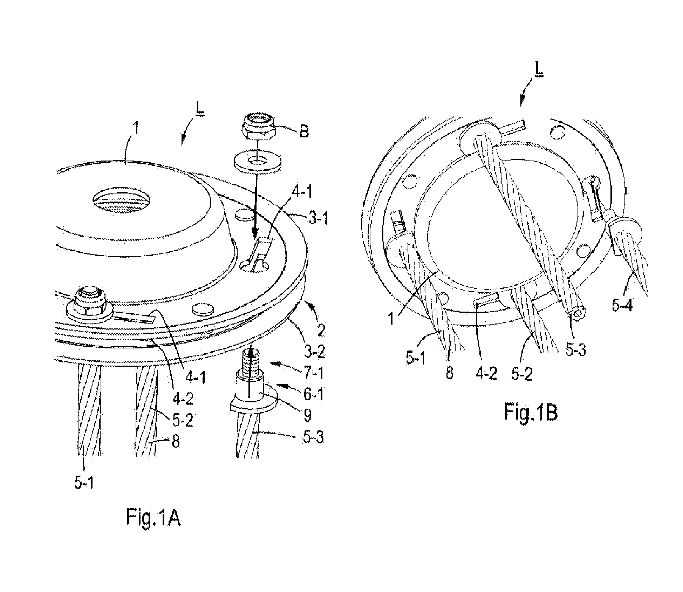

In the first embodiment shown in figures 1A and 1B, the fastening elements 7 form part of a threaded connection provided on the sleeve-like holder 9 in this embodiment, the threaded end 7-1 of which extends axially through the openings 4-1 and 4-2, whose shape is at least partially adapted to the shape of sleeve-like holder 9, and through the channel 2. A nut B is screwed on the end portion 6-1 provided with a threaded end 7-1 that is passed through said openings and said channel.

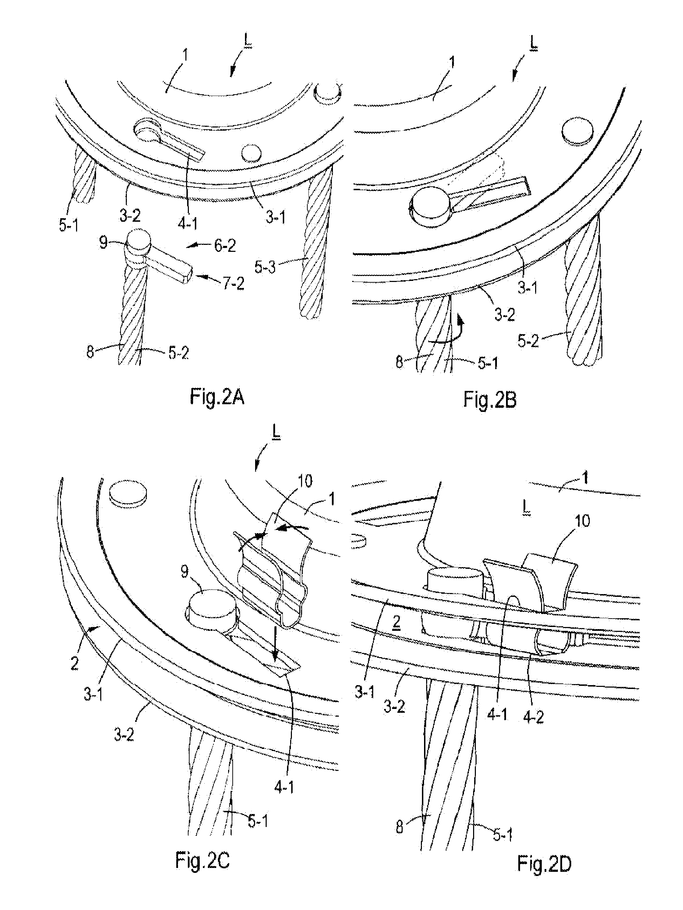

In the second embodiment shown in figures 2A, 2B, 2C and 2D, the fastening elements 7 form part of a hook connection, in this case comprising a single hook 7-2, which is provided at right angles to the sleeve-like holder 9, being in one piece therewith. In this case the sleeve-like holder 9 is axially passed through the openings 4-1 and 4-2 and through the channel 2. The shape of the opening 4 is at least partially adapted to conform to that of the hook 7-2, so that said hook is turned after being passed through the lower opening from below, seen in figures 2, as a result of which the end portion 6-2 configured as a hook 7-2 is hooked in the channel 2 as a kind of bayonet. The brush head 1 is provided with blocking elements 10, and the openings 4 are configured to receive the blocking elements 10 after the end portion 6-2 has been hooked and turned therein. The blocking elements 10 block the openings 4 and prevent the hooks 7-2 from turning therein, so that the cutting element 5 cannot be removed from said openings as long as the detachable or non-detachable elements 10 are accommodated in the openings. The blocking elements 10 are thus configured as filling elements for the openings 4. To make it possible to manually remove the blocking elements 10 from the openings 4, if desired, said blocking elements comprise spring elements, which are usually made of plastic material or of spring steel.

If, as shown in the figures, the openings 4 have a particular shape, such as the shape of a keyhole, it will in principle also be possible to fix radially outwardly oriented cutting elements in the openings 4 in such a manner that said elements are detachable but capable of pivoting movement between said flanges, as described in EP 0 683 969.

## Claims

1. A brush head for a rotary cutter, comprising: a disc-shaped body provided with two radial flanges separated by a channel, in which flanges corresponding openings are provided, and cutting elements having end portions which are detachably fixed in said openings by means of fastening elements, **characterised in that** the cutting elements extend axially outside the disc-shaped body and that the end portions are designed to be axially passed through the openings and the channel so as to be immovably fixed in the openings by means of said fastening elements.

2. A brush head according to claim 1, **characterised in that** said fastening elements form part of a threaded connection.

3. A brush head according to claim 1 or 2, **characterised in that** the end portion is configured as a threaded end.

4. A brush head according to any one of claims 1-3, **characterised in that** the fastening elements are configured as hooks.

5. A brush head according to claim 4, **characterised in that** the brush head comprises blocking elements and the openings are designed to receive said blocking elements after the end portions have been hooked and turned therein.

6. A brush head according to claim 5, **characterised in that** the blocking elements are configured as elements which can be removed from said openings.

7. A brush head according to claim 5 or 6, **characterised in that** the blocking elements are configured as filling elements for the openings.

8. A brush head according to any one of claims 5-7, **characterised in that** the blocking elements comprise spring elements.

9. A brush head according to any one of claims 5-8, **characterised in that** the blocking elements are made of spring steel or of plastic material.

10. A brush head according to any one of claims 1-9, **characterised in that** the cutting elements comprise one or more plastic or steel wires, which may or may not be twined together.

11. A brush head according to any one of claims 1-10, **characterised in that** the wires are provided with a coating.

12. A brush head according to claim 11, **characterised in that** said coating comprises plastic material.

13. A brush head according to any one of claims 1-12, **characterised in that** the fastening elements are configured as hooks and that the end portions comprise sleeve-like holders for holding the wires of the cutting elements together, which holders are in one piece with the hooks.

14. A cutting element for use in the brush head according to any one of claims 1-13, **characterised in that** the cutting element comprises sleeve-like holders at one end for holding the wires of the cutting element together, which holders are in one piece with the end portions provided with hooks of the cutting element.

15. A rotary cutter provided with a brush head according to any one of claims 1-13.
